# EUROPEAN PATENT APPLICATION

(11) **EP 2 249 416 A1**
(43) Date of publication of application: **10.11.2010**
(21) Application number: 09716454.5
(22) Date of filing: 06.03.2009
(51) Int. Cl.: H01M 2/26, H01M 10/36

(54) **LITHIUM-ION SECONDARY BATTERY AND MANUFACTURING METHOD THEREOF**

(30) Priority: 07.03.2008 JP 2008057913
(71) Applicant: Panasonic Corporation, Kadoma-shi Osaka 571-8501 (JP)
(72) Inventor: KOZUKI, Kiyomi, 1-61 Shiromi 2-chome, Chuo-ku, Osaka-shi, Osaka 540-6207 (JP); HIRAKAWA, Yasushi, 1-61 Shiromi 2-chome, Chuo-ku, Osaka-shi, Osaka 540-6207 (JP); OKADA, Yukihiro, 1-61 Shiromi 2-chome, Chuo-ku, Osaka-shi, Osaka 540-6207 (JP); FUJITA, Hideaki, 1-61 Shiromi 2-chome, Chuo-ku, Osaka-shi, Osaka 540-6207 (JP)
(74) Representative: TBK-Patent
(86) International application number: PCT/JP2009/001032
(87) International publication number: WO 2009/110250

(57) **Abstract**

A lithium ion secondary battery of the invention includes an electrode structure induding an electrode group composed of a strip-shaped laminate or winding induding a positive electrode in which a positive electrode active material layer is attached to a positive electrode current collector, a negative electrode, and a separator, a positive electrode current collector plate induding aluminum foil; and a negative electrode current collector plate electrically connected to the negative electrode. The positive electrode has, at one longitudinally extending end edge of the laminate, a positive electrode current collector-exposed portion protruding beyond the negative electrode. The positive electrode current collector plate is electrically connected to the positive electrode by applying a non-corrosive flux containing a fluoride to at least one of the positive electrode current collector-exposed portion and the positive electrode current collector plate, and then welding the positive electrode current collector plate to the positive electrode current collector-exposed portion.

## Description

### Technical Field

The present invention relates to a lithium ion secondary battery having a tabless structure in which current collector plates are welded to current collector-exposed portions provided at end edges of electrodes, and a method for produdng the same.

### Background Art

In order to increase the output of a lithium ion secondary battery, a method has been used in which the current collecting structure of the electrode group of the lithium ion secondary battery is configured as a tabless structure. The tabless structure is described below. An electrode group is formed by winding a laminate induding a positive electrode composed of a positive electrode current collector and a positive electrode active material layer attached to the positive electrode current collector, a negative electrode composed of a negative electrode current collector and a negative electrode active material layer attached to the negative electrode current collector, and a separator disposed between the positive electrode and the negative electrode. The positive electrode has, at one longitudinally extending end edge of the laminate, a portion where the positive electrode current collector is exposed (positive electrode current collector-exposed porfion). The negative electrode has, at the other longitudinally extending end edge of the laminate, a portion where the negative electrode current collector is exposed (negative electrode current collector-exposed portion). The positive electrode current collector plate is welded to the positive electrode current collector-exposed portion, whereby the positive electrode is electrically connected to the positive electrode current collector plate. The negative electrode current collector plate is welded to the negative electrode current collector-exposed portion, whereby the negative electrode is electrically connected to the negative electrode current collector plate. Consequently, a current collection path is ensured for the strip-shaped electrodes.

Further improvements for the tabless structure have been investigated. For example, Patent Document 1 proposes providing a current collector plate with a portion into which a current collector-exposed portion can bite, and welding the current collector plate to the current collector-exposed portion with a part of the current collector-exposed portion biting into that portion to achieve improved contact between the current collector plate and the electrode. However, since aluminum foil is used as the positive electrode current collector of lithium ion secondary batteries, the positive electrode current collector-exposed portion cannot be easily wetted by the molten metal from the positive electrode current collector plate at the time of welding, making it difficult to achieve good bonding. Consequently, the bonding area and the bonding strength between the positive electrode current collector-exposed portion and the positive electrode current collector plate cannot be provided sufficiently, which may result in deteriorated output characteristics of the battery and reduced reliability against vibrations and falling.

Patent Document 2 proposes applying a brazing material to a current collector plate in advance, abutting the surface of the current collector plate to which the brazing material has been applied on a current collector-exposed portion, and welding the current collector plate to the electrode at this abutment portion to reliably bond the current collector plate to the current collector-exposed portion made of aluminum foil. However, metal components contained in the brazing material other than aluminum may be mixed in the welded portion at the time of welding, and these components may further enter into the battery structure, adversely affecting the battery characteristics.
Patent Document 1: Japanese Patent No. 3738166
Patent Document 2: Japanese Laid-Open Patent Publication No. 2001-93505

### Disclosure of the Invention

### Problem to be Solved by the Invention

Therefore, it is an object of the present invention to provide a highly reliable lithium ion secondary battery having excellent output characteristics, and a method for producing the same in order to solve the above-described conventional problems.

### Means for Solving the Problem

A lithium ion secondary battery according to the present invention includes:
an electrode structure induding an electrode group including a laminate or a winding of a strip-shaped positive electrode in which a positive electrode active material layer is attached to a positive electrode current collector, a strip-shaped negative electrode in which a negative electrode active material layer is attached to a negative electrode current collector, and a strip-shaped porous insulating material disposed between the positive electrode and the negative electrode; a positive electrode current collector plate; and a negative electrode current collector plate electrically connected to the negative electrode; and
a battery container housing the electrode structure,
wherein the positive electrode current collector is aluminum foil,
the positive electrode has, at one longitudinally extending end edge of the laminate, a positive electrode current collector-exposed portion protruding beyond the negative electrode, and
the positive electrode current collector plate is electrically connected to the positive electrode by applying a non-corrosive flux induding a fluoride to at least one of the positive electrode current collector-exposed portion and the positive electrode current collector plate, and then welding the positive electrode current collector plate to the positive electrode current collector-exposed portion.
Preferably, the fluoride contains aluminum and potassium.
Preferably, the flux contains a eutectic of KF and AIF₃.

Preferably, the negative electrode has, at the other longitudinally extending end edge of the laminate, a negative electrode current collector-exposed portion protruding beyond the positive electrode, and the negative electrode current collector plate is welded to the negative electrode current collector-exposed portion.
Preferably, the positive electrode current collector plate is an aluminum plate.

Furthermore, the present invention relates to a method for producing a lithium ion secondary battery induding the steps of:
(1) laminating or winding a strip-shaped positive electrode in which a positive electrode active material layer is attached to a positive electrode current collector induding aluminum foil and having a positive electrode current collector-exposed portion at one longitudinally extending end edge thereof, a strip-shaped negative electrode in which a negative electrode active material layer is attached to a negative electrode current collector, and a strip-shaped porous insulating material, in such a manner that the porous insulating material is disposed between the positive electrode and the negative electrode, and the positive electrode current collector-exposed portion protrudes beyond the negative electrode, to obtain an electrode group;
(2) applying a non-corrosive flux induding a fluoride to at least one of the positive electrode current collector-exposed portion and a positive electrode current collector plate;
(3) welding, after the step (2), the positive electrode current collector plate to the positive electrode current collector-exposed portion, thereby electrically connecting the positive electrode current collector plate to the positive electrode;
(4) electrically connecting a negative electrode current collector plate to the negative electrode; and
(5) housing, in a battery container, an electrode structure induding the electrode group, and the positive electrode current collector plate and the negative electrode current collector plate respectively welded to the electrode group.
Preferably, the fluoride contains aluminum and potassium.
Preferably, the flux contains a eutectic of KF and AIF₃.

Preferably, the negative electrode has a negative electrode current collector-exposed portion at one longitudinally extending end edge thereof; in the step (1), the positive electrode, the negative electrode, and the porous insulating material are laminated or wound in such a manner that the negative electrode current collector-exposed portion protrudes beyond the positive electrode; and, in the step (4), the negative electrode current collector plate is welded to the negative electrode current collector-exposed portion.
Preferably, the positive electrode current collector plate is an aluminum plate.

### Effect of the Invention

The present invention can provide a highly reliable lithium ion secondary battery having excellent output characteristics, and a method for produdng the same.

### Brief Description of the Drawings

FIG. 1 is a schematic vertical cross-sectional view of a lithium ion secondary battery according to one embodiment of the present invention.
FIG. 2 is a perspective view of the electrode structure shown in FIG. 1.

### Best Mode for Carrying Out the Invention

The present invention relates to a lithium ion secondary battery including: an electrode structure induding an electrode group induding a laminate or a winding of a strip-shaped positive electrode in which a positive electrode active material layer is attached to a positive electrode current collector, a strip-shaped negative electrode in which a negative electrode active material layer is attached to a negative electrode current collector, and a strip-shaped porous insulating material disposed between the positive electrode and the negative electrode; a positive electrode current collector plate; and a negative electrode current collector plate electrically connected to the negative electrode; and a battery container housing the electrode structure. The invention is **characterized in that** the positive electrode current collector is aluminum foil, the positive electrode has, at one longitudinally extending end edge of the laminate, a positive electrode current collector exposed portion protruding beyond the negative electrode, and the positive electrode current collector plate is electrically connected to the positive electrode, by applying a non-corrosive flux induding a fluoride to at least one of the positive electrode current collector-exposed portion and the positive electrode current collector plate, and then welding the positive electrode current collector plate to the positive electrode current collector-exposed portion.
This ensures good contact between the positive electrode for which aluminum foil is used as the positive electrode current collector and the positive electrode current collector plate, thus yielding a highly reliable lithium ion secondary battery having excellent output characteristics.
When the electrode group is a winding, this positive electrode current collector plate is disposed so as to cover a plane substantially perpendicular to the winding axis of the electrode group. The non-corrosive flux is applied to at least one of the portion of the positive electrode current collector exposed portion that is welded to the positive electrode current collector plate and the portion of the positive electrode current collector plate that is welded to the positive electrode current collector-exposed portion.

An example of the current collecting structure on the negative electrode side (the form of connection between the negative electrode and the negative electrode current collector plate) described above is the same structure (tabless structure) as that on the positive electrode side. Specifically the above-described negative electrode has, at the other longitudinally extending end edge of the laminate, a negative electrode current collector-exposed portion protruding beyond the positive electrode, and the negative electrode current collector plate is welded to the negative electrode current collector-exposed portion. When the electrode group is a winding, this negative electrode current collector plate is disposed so as to cover a plane substantially perpendicular to the winding axis of the electrode group.
Alternatively, a lead-shaped negative electrode current collector plate may be used as the negative electrode current collector plate. Specifically, the strip-shaped negative electrode may have a structure such that it has a negative electrode current collector-exposed portion along one widthwise end edge, and the lead-shaped negative electrode current collector plate is welded to the negative electrode current collector-exposed portion. The lead-shaped negative electrode current collector plate is disposed in the width direction of the negative electrode (along the winding axis of the electrode group).

The thickness of the aluminum foil used as the positive electrode current collector may be 10 to 30 µm, for example.
To achieve excellent current collection capability and chemical stability under use conditions of lithium ion secondary batteries, it is preferable to use an aluminum plate as the positive electrode current collector plate. The thickness of the aluminum plate may be 0.3 to 1 mm, for example.

A method for producing a lithium ion secondary battery according to the present invention includes the steps of:
(1) laminating or winding a strip-shaped positive electrode in which a positive electrode active material layer is attached to a positive electrode current collector induding aluminum foil and having a positive electrode current collector-exposed portion at one longitudinally extending end edge thereof, a strip-shaped negative electrode in which a negative electrode active material layer is attached to a negative electrode current collector, and a strip-shaped porous insulating material, in such a manner that the porous insulating material is disposed between the positive electrode and the negative electrode, and the positive electrode current collector-exposed portion protrudes beyond the negative electrode, to obtain an electrode group;
(2) applying a non-corrosive flux induding a fluoride to at least one of the positive electrode current collector-exposed portion and a positive electrode current collector plate;
(3) welding, after the step (2), the positive electrode current collector plate to the positive electrode current collector-exposed portion, thereby electrically connecting the positive electrode current collector plate to the positive electrode;
(4) electrically connecting a negative electrode current collector plate to the negative electrode; and
(5) housing, in a battery container, an electrode structure induding the electrode group, and the positive electrode current collector plate and the negative electrode current collector plate respectively welded to the electrode group.

When the negative electrode has the same structure as that of the positive electrode (a structure corresponding to the tabless structure), or in other words, when the negative electrode has a negative electrode current collector-exposed portion at one longitudinally extending end edge thereof, the positive electrode, the negative electrode, and the separator are laminated or wound in such a manner that the negative electrode current collector-exposed portion protrudes beyond the positive electrode in the step (1), and the negative electrode current collector plate is welded to the negative electrode current collector-exposed portion in the step (4).
An example of forming a laminate is a method in which a separator made of a porous resin film is disposed between the positive electrode and the negative electrode as an insulating material at the time of forming the laminate. Another example is a method in which a porous resin layer is formed as an insulating material on one of the positive electrode and the negative electrode prior to the lamination, and one of the positive electrode and the negative electrode on which the porous resin layer is formed is laminated on the other of the positive electrode and the negative electrode.

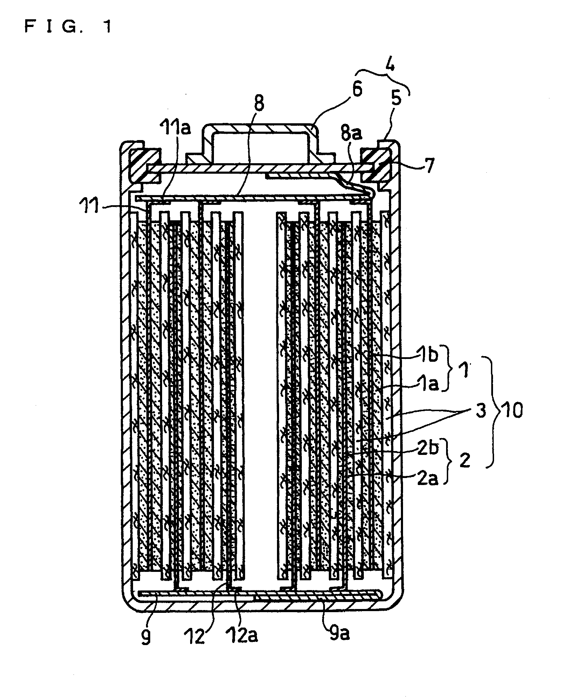

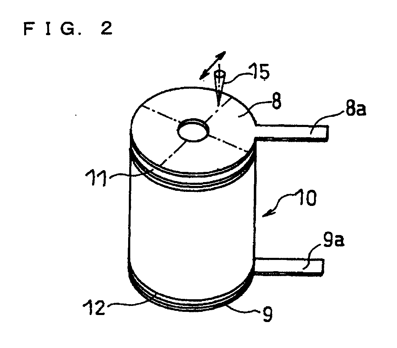

Hereinafter, one embodiment of the lithium ion secondary battery according to the present invention is described with reference to FIGS. 1 and 2. FIG. 1 is a schematic vertical cross-sectional view of a cylindrical lithium secondary battery. FIG. 2 is a schematic perspective view of the electrode structure.
As shown in FIG.1, the electrode structure is housed in a battery container 4 composed of a cylindrical battery can 5 having a bottom and also serving as a negative electrode terminal, and a battery cover 6 also serving as a positive electrode terminal. The electrode structure is composed of a columnar electrode group 10 formed by winding a laminate of a positive electrode 1, a negative electrode 2, and a separator 3 disposed between the positive electrode 1 and the negative electrode 2, a disc-shaped positive electrode current collector plate 8 electrically connected to the positive electrode 1, and a disc-shaped negative electrode current collector plate 9 electrically connected to the negative electrode 2. The positive electrode current collector plate 8 and the negative electrode current collector plate 9 are both disposed so as to cover planes (flat portions 11a and 12a that will be described below) substantially perpendicular to the winding axis of the electrode group 10. Furthermore, separators 3 are disposed on the outermost circumference side and on the innermost circumference side of the electrode group.

One end of a positive electrode connector piece 8a is connected to the positive electrode current collector plate 8, and the other end of the positive electrode connector piece 8a is connected to the bottom surface of the battery cover 6. Thereby, the positive electrode 1 is electrically connected to the battery cover 6. One end of a negative electrode connector piece 9a is connected to the negative electrode current collector plate 9, and the other end of the negative electrode connector piece 9a is connected to the inner bottom surface of the battery can 5. Thereby, the negative electrode 2 is electrically connected to the battery can 5. The end portion of the opening of the battery can 5 is crimped onto the peripheral edge of the battery cover 6 with a ring-shaped resin sealing body 7 interposed therebetween, and thereby the electrode structure is housed in the battery container 4 in a hermetically sealed manner.

The positive electrode 1 is composed of a positive electrode current collector 1b made of aluminum foil, and positive electrode active material layers 1a formed on both sides of the positive electrode current collector 1b. The positive electrode active material layer 1a may be composed of, for example, a mixture of a positive electrode active material, a conductive material, and a binder. For example, a lithium-containing composite oxide such as LiNiO₂, LiCoO₂, or LiMn₂O₄ may be used as the positive electrode active material. It is also possible to use an oxide in which Ni, Co, or Mn in such oxides is partially substituted with another transition metal. For example, a carbon material such as acetylene black may be used as the conductive material. For example, polyvinylidene fluoride may be used as the binder.

The positive electrode 1 has, at one end edge of the positive electrode 1 extending in the longitudinal direction of the laminate (the upper end edge of the positive electrode 1 in FIG. 1), portion where the positive electrode active material layer 1a is not formed, that is, a portion where the positive electrode current collector 1b is exposed (positive electrode current collector-exposed portion 11). The positive electrode current collector-exposed portion 11 protrudes upward beyond the negative electrode 2 along the winding axis, and the end edge of the positive electrode current collector-exposed portion 11 is bent in a direction substantially perpendicular to the winding axis and inward toward the center of the axis, thus forming a flat portion 11a, which will be a portion welded to the positive electrode current collector plate 8 as described below. The positive electrode current collector plate 8 is welded to the end edge (flat portion 11a) of the positive electrode current collector-exposed portion 11 to which a non-corrosive flux containing a fluoride is applied, whereby the positive electrode current collector plate 8 is electrically connected to the positive electrode 1.

A flux is used as a fusing agent for welding for the purpose of removing an oxide film formed on the metal surface of a welded portion and preventing the formation of such an oxide film. An oxide film on the surface of aluminum foil is dissolved and removed by the flux that has been melted by heating during welding. This significantly improves the wettability of the molten metal from the current collector plate to the aluminum foil, and can thus achieve a favorable welding state between the positive electrode current collector plate and the flat portion of the positive electrode current collector-exposed portion, making it possible to provide a welding area and welding strength that are sufficient to attain a good state of bonding of the positive electrode current collector plate to the positive electrode.
When a corrosive flux (for example, a flux containing a chloride) is used, it is necessary to perform a treatment to remove the remaining flux components after welding for the purpose of preventing corrosion of the welded portion. However, according to the present invention, it is not necessary to remove the remaining flux components since the present invention uses a non-corrosive flux.
According to the present invention, since it is not necessary to use a brazing material for welding the positive electrode current collector plate and the positive electrode current collector-exposed portion, the components contained in a brazing material will not adversely affect the battery, making it possible to provide a highly reliable battery.

The fluoride may contain, for example, aluminum, potassium, or cesium. It is preferable that the fluoride contains aluminum and potassium because of their excellent non-corrosive properties and non-hygroscopic properties. Examples of the fluoride include KAIF₄, K₂AIF₅, K₃AIF₆, AIF₃, KF, and CsF These may be used singly or in combination of two or more. Examples of the non-corrosive flux include a flux containing AIF₃ and KF, a flux containing KAIF₄ and K₃AIF₆, and a flux containing KF,AIF₃, and Al₂O3.

It is preferable to use "NOCOLOK" (registered trademark) as the flux. The amount of "NOCOLOK" applied to the positive electrode current collector-exposed portion may be 0.1 to 0.3 g/cm², for example. "NOCOLOK" is a flux having a eutectic composition of KF and AIF₃, and has a eutectic point of 560 to 570°C. Therefore, when an aluminum plate is used as the positive electrode current collector plate, the temperature at which the positive electrode current collector plate is welded to the flat portion of the positive electrode current collector-exposed portion is preferably 570 to 660°C.
Although the flux remains on the surface of the portion where the positive electrode and the positive electrode current collector plate are welded to each other, the flux will not adversely affect the battery characteristics since it is non-corrosive. "NOCOLOK" has excellent corrosion resistance, and therefore "NOCOLOK" remaining on the surface improves the corrosion resistance of the portion where the positive electrode current collector plate and the flat portion of the positive electrode current collector-exposed portion are welded to each other.

The negative electrode 2 is composed of a negative electrode current collector 2b and negative electrode active material layers 2a formed on both sides of the negative electrode current collector 2b. For example, copper foil may be used as the negative electrode current collector 2b. The negative electrode active material layer 2a may be composed of, for example, a mixture of a negative electrode active material, a conductive material, and a binder. For example, a carbonaceous material such as graphite, petroleum coke, or carbon fiber, or a metal or oxide capable of absorbing and desorbing lithium may be used as the negative electrode active material. For example, a carbon material such as artificial graphite may be used as the conductive material. For example, polyvinylidene fluoride may be used as the binder.

The negative electrode 2 has, at the other end edge of the negative electrode 2 extending in the longitudinal direction of the laminate (the lower end edge in FIG. 1), portion where the negative electrode active material layer 2a is not formed, that is, a portion where the negative electrode current collector 2b is exposed (negative electrode current collector-exposed portion 12). The negative electrode current collector-exposed portion 12 protrudes downward beyond the positive electrode 1 along the winding axis, and the end edge of the negative electrode current collector-exposed portion 12 is bent in a direction substantially perpendicular to the winding axis and inward toward the center of the axis, thus forming a flat portion 12a, which will be a portion welded to the negative electrode current collector plate 9. The negative electrode current collector plate 9 is welded to the flat portion 12a of the negative electrode current collector-exposed portion 12, whereby the negative electrode current collector plate 9 is electrically connected to the negative electrode 2.

For example, a microporous film made of polyethylene or polypropylene may be used as the separator 3.
The electrode group 10 includes an electrolyte. The electrolyte is composed of a non-aqueous solvent and a lithium salt dissolved in the non-aqueous solvent. For example, ethylene carbonate, propylene carbonate, dimethyl carbonate, or ethylmethyl carbonate may be used as the non-aqueous solvent. For example, lithium hexafluorophosphate, lithium perchlorate, or lithium tetrafluoroborate may be used as the lithium salt.

Hereinafter, a description is given of a specific example of a production method of an electrode structure composed of the electrode group 10, the positive electrode current collector plate 8, and the negative electrode current collector plate 9.
Before forming a laminate (before forming the flat portion 11a), a slurry prepared by dispersing a flux in water is applied to the end edge (the portion where the flat portion 11a is to be formed) of the positive electrode current collector-exposed portion 11. Thereafter, water is removed by thermal drying to form a flux-coated layer on the end edge of the positive electrode current collector-exposed portion. Alternatively a flux-coated layer may be formed by applying the above-described slurry to the flat portion 11a after forming the flat portion 11a.
An appropriate amount of a binder such as carboxymethyl cellulose, polyethylene oxide, polyacrylic add, or starch may be further added to the above-described slurry.
Apart from the above-described slurry, it is possible to use a slurry prepared by dispersing a flux in an organic solvent. Examples of the organic solvent include aliphatic hydrocarbons such as hexane and aromatic hydrocarbons such as toluene. An appropriate amount of a binder such as polyvinyl butyral, polyvinyl pyrrolidone, or polystyrene may be further added to such a slurry.

The positive electrode 1, the negative electrode 2, and the separator 3 are laminated in such a manner that the separator 3 is disposed between the positive electrode 1 and the negative electrode 2, the positive electrode current collector-exposed portion 11 protrudes beyond the negative electrode 2, and the negative electrode current collector-exposed portion 12 protrudes beyond the positive electrode 1, to form a laminate, which is further wound to yield an electrode group 10. After the electrode group 10 is inserted into a cylindrical molding tool having a bottom, the electrode group 10 is pressed in the direction of the winding axis from the opening of the molding tool using a specific pressing tool. At this time, the end edges of the positive electrode current collector-exposed portion 11 and the negative electrode current collector exposed portion 12 are elastically deformed so as to be bent, thus forming flat portions 11 and 12a. Since the positive electrode 1 and the negative electrode 2 are wound, the positive and negative electrode current collector-exposed portions 11 and 12 are bent inward.

The positive electrode current collector plate 8 is abutted on the flat portion 11a having a flux-coated layer formed on the surface thereof. The positive electrode current collector plate 8 is heated using a non-contact heat source from the surface opposite the surface thereof abutting on the flat portion 11a. Thus, the positive electrode current collector plate 8 is welded to the flat portion 11a of the positive electrode current collector-exposed portion 11. Examples of welding using a non-contact heat source include arc welding such as TIG welding, laser beam welding, and electron beam welding. In terms of working efficiency and uniform current collection, it is preferable that welding is performed while moving a non-contact heat source 15 radially from above the disc-shaped positive electrode current collector plate 8 (from above the surface opposite the surface abutting on the positive electrode current collector-exposed portion 11) as shown in FIG. 2. The negative electrode current collector plate 9 is welded to the flat portion 12a of the negative electrode current collector-exposed portion 12 in the same manner as in the case where the positive electrode current collector plate 8 is welded to the flat portion 11a of the positive electrode current collector-exposed portion 11.
In the above-described embodiment, a case was described where the flux is applied to the surface of the positive electrode current collector-exposed portion abutting on the positive electrode current collector plate. However, the flux may be applied to the surface of the positive electrode current collector plate abutting on the positive electrode current collector-exposed portion, or the flux may be applied to both of the surface of the positive electrode current collector-exposed portion abutting on the positive electrode current collector plate and the surface of the positive electrode current collector plate abutting on the positive electrode current collector-exposed portion.

### Examples

Examples of the present invention will be described in detail below, but the invention is not limited to these examples.

### <<Example 1>>

A cylindrical lithium secondary battery having the structure shown in FIG. 1 as described above was produced in the following manner.

### (1) Production of positive electrode

Lithium cobaltate powder (average particle diameter of 10 µm) as a positive electrode active material, acetylene black (average particle diameter of 35 µm) as a conductive material, polyvinylidene fluoride (hereinafter, referred to as "PVDF") as a binder were mixed in a weight ratio of 85:10:5 to yield a positive electrode mixture. This positive electrode mixture was applied to both sides of a 15 µm-thick, 56 mm-wide strip-shaped positive electrode current collector 1b made of aluminum foil, and then dried to form a positive electrode active material layer 1a. At this time, a portion where the positive electrode mixture was not applied (current collector-exposed portion 11) was provided at one widthwise end of the positive electrode current collector 1b. The portion where the positive electrode mixture was applied (positive electrode mixture-coated portion) was rolled to produce a 100 µm-thick strip-shaped positive electrode 1. At this time, in the width direction of the positive electrode 1, the width of the positive electrode mixture-coated portion was 50 mm, and the width of the positive electrode mixture-uncoated portion (current collector-exposed portion 11) was 6 mm.

A slurry prepared by dispersing a non-corrosive flux ("NOCOLOK" (registered trademark), manufactured by Rio Tinto Alcan Inc.) in water was applied to a portion of the end edge of the current collector-exposed portions 11 extending from the end edge in a width of 1 mm of the width (6 mm) of the positive electrode mixture-uncoated portion (current collector-exposed portion 11), and then heated at 100°C for 5 minutes to remove water. Thus, a flux-coated layer was formed on the end edge of the positive electrode current collector-exposed portion 11. At this time, the amount of the flux applied was 0.2 g/crn².

### (2) Production of negative electrode

Artificial graphite powder (average particle diameter 15 µm) as a negative electrode active material and PVDF as a binder were mixed in a weight ratio of 95:5 to yield a negative electrode mixture. This negative electrode mixture was applied to both sides of a 10 µm-thick, 57 mm-wide strip-shaped negative electrode current collector 2b made of copper foil, and then dried to form a negative electrode active material layer 2a. At this time, a portion where the negative electrode mixture was not applied (current collector-exposed portion 12) was provided at one widthwise end of the negative electrode current collector 2b. The portion where the negative electrode mixture was applied (negative electrode mixture-coated portion) was rolled to produce a 100 µm-thick strip-shaped negative electrode 2. At this time, in the width direction of the negative electrode 2, the width of the negative electrode mixture-coated portion was 52 mm, and the width of the negative electrode mixture-uncoated portion (current collector-exposed portion 12) was 5 mm.

### (3) Production of electrode group

A strip-shaped separator 3 (having a width of 53 mm and a thickness of 25 µm) made of a microporous polypropylene resin film was disposed between the positive electrode mixture-coated portion and the negative electrode mixture-coated portion. Thereafter, the positive electrode, the negative electrode, and the separator were spirally wound to produce an electrode group 10. At this time, separators 3 were also disposed on the outermost circumference side and on the innermost circumference side of the electrode group 10.

### (4) Production of current collector plate

A 50 mm-square aluminum plate (A1050) (thickness of 1 mm) was pressed into a disc with a diameter of 24 mm to give a positive electrode current collector plate 8. In addition, a hole with a diameter of 7 mm was formed in the center of the aluminum disk.
A 50 mm-square copper plate (C1020) (thickness of 0.6 mm) was pressed into a disc with a diameter of 24 mm to give a negative electrode current collector plate 9.

### (5) Production of electrode structure

The electrode group 10 was inserted into a specific cylindrical molding tool having a bottom, and then pressed by a specific pressing tool from the opening of the molding tool. At this time, the end edges of the current collector-exposed portions 11 and 12 of the positive and negative electrodes were bent inward, and thereby flat portions 11a and 12a were formed.
The positive electrode current collector plate 8 was abutted on the flat portion 11a of the current collector-exposed portion 11 where the flux-coated layer was formed, and the positive electrode current collector plate was TIG-welded to the flat portion 11a of the positive electrode current collector-exposed portion 11. More specifically, as shown in FIG. 2, using an arc welding machine (a full digital AC/DC TIG welding machine 300BP2, manufactured by Panasonic Welding Systems Co., Ltd.) as a non-contact heat source 15, an arc was applied to the upper surface of the positive electrode current collector plate 8 while moving the non-contact heat source 15 radially from above the positive electrode current collector plate 8 (from above the surface opposite the surface abutting on the positive electrode current collector-exposed portion 11). The conditions of the TIG welding for the positive electrode 1 side were a current value of 150 A and a welding time of 100 ms. The negative electrode current collector plate 9 was abutted on the flat portion 12a of the current collector-exposed portion 12 of the negative electrode 2, and the flat portion 12a of the negative electrode current collector-exposed portion 12 was TIG-welded to the negative electrode current collector plate 9 in the same manner as described above. The conditions of the TIG welding for the negative electrode 2 side were a current value of 200A and a welding time of 50 ms. Thus, an electrode structure was produced.

### (6) Production of cylindrical lithium ion secondary battery

One end of the aluminum positive electrode connector piece 8a was laser-welded to the positive electrode current collector plate 8 of the electrode structure. One end of the copper negative electrode connector piece 9a was laser-welded to the negative electrode current collector plate 9 of the electrode structure. Thereafter, the electrode structure was housed in the cylindrical battery can 5 having a bottom, and then the other end of the negative electrode connector piece 9a was resistance-welded to the inner bottom surface of the battery can 5. The other end of the positive electrode connector piece 8a was laser-welded to the battery cover 6.

Subsequently, the battery can 5 was dried by heating, and a non-aqueous electrolyte was then injected into the battery can 5. As the non-aqueous electrolyte, a non-aqueous electrolyte prepared by dissolving lithium hexafluorophosphate (LiPF₆) in a mixed solvent of ethylene carbonate and ethylmethyl carbonate (volume ratio 1:1) was used. Thereafter, the peripheral edge of the battery cover 6 was crimped to the end of the opening of the battery can 5 with the resin sealing body 7 disposed therebetween. Thus, the electrode structure was housed in a hermetically sealed manner in the battery container 4 composed of the battery can 5 and the battery cover 6 to produce a cylindrical lithium ion secondary battery (battery capacity of 2600 mAh) with a diameter of 26 mm and a height of 65 mm.

### «Comparative Example 1»

A cylindrical lithium secondary battery was produced in the same manner as in Example 1 except that the non-corrosive flux was not applied to the positive electrode current colledor-exposed portion.

### [Evaluation]

### (1) Measurement of tensile strength

Five pieces of each battery of Example 1 and Comparative Example 1 were provided. The tensile strength of the portion where the positive electrode current collector plate and the positive electrode are welded to each other of each battery was measured in accordance with JIS Z 2241. Specifically, while the electrode group was held on one side of a tensile tester (with a load cell SL-5001 and a displacement meter SL-1 00, manufactured by IMADA SEISAKUSHO CO., LTD.), the positive electrode current collector plate was held on the other side of the tensile tester. The electrode group and the positive electrode current collector plate were pulled in the axial directions of the tensile tester (the directions in which the electrode group and the current collector plate moved away from each other) at a constant speed, and the load with which the welded portion failed and the positive electrode current collector plate was separated from the portion where it was bonded to the electrode group was regarded as a tensile strength.
All of the batteries of Example 1 had a tensile strength of 70 N or greater. On the other hand, three of the five batteries of Comparative Example 1 had a tensile strength of 20 N or less, and the welded portion failed.

### (2) Measurement of internal resistance of batteries

Fifty pieces of each battery of Example 1 and Comparative Example 1 were provided. Each battery was subjected to three repeated charge/discharge cycles in each of which the battery was charged with a constant current of 1250 mA until the dosed-circuit voltage reached 4.2 V and then discharged with a constant current of 1250 mA until the dosed-circuit voltage reached 3.0 V Thereafter, an alternating current of 1 kHz was applied to each battery to measure the internal resistance. Then, the average value for and the variation in the internal resistance were determined. The ratio of the maximum value (absolute value) of the difference between a measured value and the average value relative to the average value was used as the variation.
For the batteries of Example 1, the average value of the intemal resistance was 5 mΩ, and the variation was 10%. On the other hand, for the batteries of Comparative Example 1, the average value of the internal resistance was 11 mΩ, and the variation was 20%.

The average output current (I) was calculated from the measured internal resistance value (R) of each battery. Specifically, the average output current in the case of charging a battery until the dosed-circuit voltage reached 4.2 V and then discharging the battery until the dosed-circuit voltage reached 1.5 V was calculated according to the equation:I (Average output current) = 2.7V(Voltage)/R (Resistance).
The average value of the output currents of the batteries of Example 1 was 540 A, whereas that of the batteries of Comparative Example 1 was 245 A. This showed that the batteries of Example 1 can be discharged with a larger current than the batteries of Comparative Example 1.

### (3) Battery vibration test

Three pieces of each battery of Example 1 and Comparative Example 1 were provided. Each battery was subjected to a vibration test in accordance with JIS D 1601.
None of the batteries of Example 1 showed any change in voltage before and after the test, and the inspection of the interior after disassembling the batteries did not show any abnormality. On the other hand, two of the three batteries of Comparative Example 1 showed a voltage of 0 volt after the test. As a result of disassembling these batteries and inspecting the interior thereof, it was confirmed that the portion where the positive electrode current collector plate and the positive electrode current collector-exposed portion had been welded to each other failed. In addition, as a result of inspecting the interior of the battery of Comparative Example 1 whose voltage after the test was not 0 volt, it was confirmed that the welded area (the region where the bonded state was maintained) of the battery was smaller than that of the batteries of Example 1.

### Industrial Applicability

The lithium ion secondary battery of the present invention can be suitably used as a power source of electronic devices requiring high output, such as portable devices.

## Claims

1. A lithium ion secondary battery comprising:
an electrode structure comprising an electrode group induding a laminate or a winding of a strip-shaped positive electrode in which a positive electrode active material layer is attached to a positive electrode current collector, a strip-shaped negative electrode in which a negative electrode active material layer is attached to a negative electrode current collector, and a strip-shaped porous insulating material disposed between said positive electrode and said negative electrode; a positive electrode current collector plate; and a negative electrode current collector plate electrically connected to said negative electrode; and
a battery container housing said electrode structure,
wherein said positive electrode current collector is aluminum foil,
said positive electrode has, at one longitudinally extending end edge of said laminate, a positive electrode current collector-exposed portion protruding beyond said negative electrode, and
said positive electrode current collector plate is electrically connected to said positive electrode, by applying a non-corrosive flux comprising a fluoride to at least one of said positive electrode current collector-exposed portion and said positive electrode current collector plate, and then welding said positive electrode current collector plate to said positive electrode current collector-exposed portion.

2. The lithium ion secondary battery in accordance with daim 1, wherein said fluoride contains aluminum and potassium.

3. The lithium ion secondary battery in accordance with daim 1, wherein said flux contains a eutectic of KF and AIF₃.

4. The lithium ion secondary battery in accordance with any of daims 1 to 3,
wherein said negative electrode has, at the other longitudinally extending end edge of said laminate, a negative electrode current collector-exposed portion protruding beyond said positive electrode, and
said negative electrode current collector plate is welded to said negative electrode current collector-exposed portion.

5. The lithium ion secondary battery in accordance with any of daims 1 to 4, wherein said positive electrode current collector plate is an aluminum plate.

6. A method for producing a lithium ion secondary battery comprising the steps of:
(1) laminating or winding a strip-shaped positive electrode in which a positive electrode active material layer is attached to a positive electrode current collector comprising aluminum foil and having a positive electrode current collector-exposed portion at one longitudinally extending end edge thereof, a strip-shaped negative electrode in which a negative electrode active material layer is attached to a negative electrode current collector, and a strip-shaped porous insulating material,
in such a manner that said porous insulating material is disposed between said positive electrode and said negative electrode, and said positive electrode current collector-exposed portion protrudes beyond said negative electrode, to obtain an electrode group;
(2) applying only a non-corrosive flux comprising a fluoride to at least one of said positive electrode current collector-exposed portion and a positive electrode current collector plate comprising an aluminum plate;
(3) welding, after said step (2), said positive electrode current collector plate to said positive electrode current collector-exposed portion, thereby electrically connecting said positive electrode current collector plate to said positive electrode;
(4) electrically connecting a negative electrode current collector plate to said negative electrode; and
(5) housing, in a battery container, an electrode structure comprising said electrode group, and said positive electrode current collector plate and said negative electrode current collector plate respectively welded to said electrode group.

7. The method for producing a lithium ion secondary battery in accordance with daim 6, wherein said fluoride contains aluminum and potassium.

8. The method for produdng a lithium ion secondary battery in accordance with daim 6, wherein said flux contains a eutectic of KF and AIF₃.

9. The method for produdng a lithium ion secondary battery in accordance with any of daims 6 to 8,
wherein said negative electrode has a negative electrode current collector-exposed portion at one longitudinally extending end edge thereof,
in said step (1), said positive electrode, said negative electrode, and said porous insulating material are laminated or wound in such a manner that said negative electrode current collector-exposed portion protrudes beyond said positive electrode, and,
in said step (4), said negative electrode current collector plate is welded to said negative electrode current collector-exposed portion.

10. The method for producing a lithium ion secondary battery in accordance with any of daims 6 to 9, wherein said positive electrode current collector plate is an aluminum plate.
